# FASCICULE DE BREVET EUROPEEN

(11) **EP 1 154 582 B1**
(45) Date de publication et mention de la délivrance du brevet: **08.03.2006**
(21) Numéro de dépôt: 01401121.7
(22) Date de dépôt: 30.04.2001
(51) Int. Cl.: H04B 1/28

(54) **Récepteur radio courte portée multibande pour données de véhicule automobile**
Multibandradioempfänger mit geringer Reichweite zum Datenempfang aus Fahrzeugen
Short-range multiband radio receiver for motor vehicle data reception

(30) Priorité: 04.05.2000 FR 0005689
(43) Date de publication de la demande: 14.11.2001
(73) Titulaire: JOHNSON CONTROLS AUTOMOTIVE ELECTRONICS, 95526 Cergy Pontoise Cédex (FR)
(72) Inventeur: Eray, Yves, 94300 Vincennes (FR)
(74) Mandataire: Bloch, Gérard

(56) Documents cités:
- US-A- 5 193 210
- US-A- 5 852 784

## Description

L'invention concerne les récepteurs radio courte portée installés à bord des véhicules automobiles pour recevoir des données telles que par exemple des signaux de télécommande de verrouillage et déverrouillage des portières.

Les récepteurs classiques de tels signaux de télécommande fonctionnent dans une bande de fréquences unique, autour de 434 MHz en France et de 315 MHz aux Etats-Unis d'Amérique et au Japon.

Du fait de cette unicité de bande dans un pays déterminé, le brouillage est fréquent entre les émetteurs portatifs de télécommande des véhicules en stationnement sur un même parking.

Au niveau mondial, les fabricants de ces récepteurs doivent par contre les concevoir en fonction de la demande des constructeurs automobiles, donc avec des séries limitées, plus coûteuses. On notera en outre qu'une autre bande de fréquences, autour de 868 MHz, est maintenant autorisée en Europe.

Le document US 5 852 784 de l'art antérieur décrit un récepteur multibande.

La demanderesse a donc souhaité offrir un récepteur multibande, universel, capable de s'adapter aux émissions d'émetteurs à diverses bandes de fréquences.

L'object de l'invention est obtenu par le récepteur radio selon la revendication 1. Des modes particuliers de réalisation sont décrits dans les revendications.

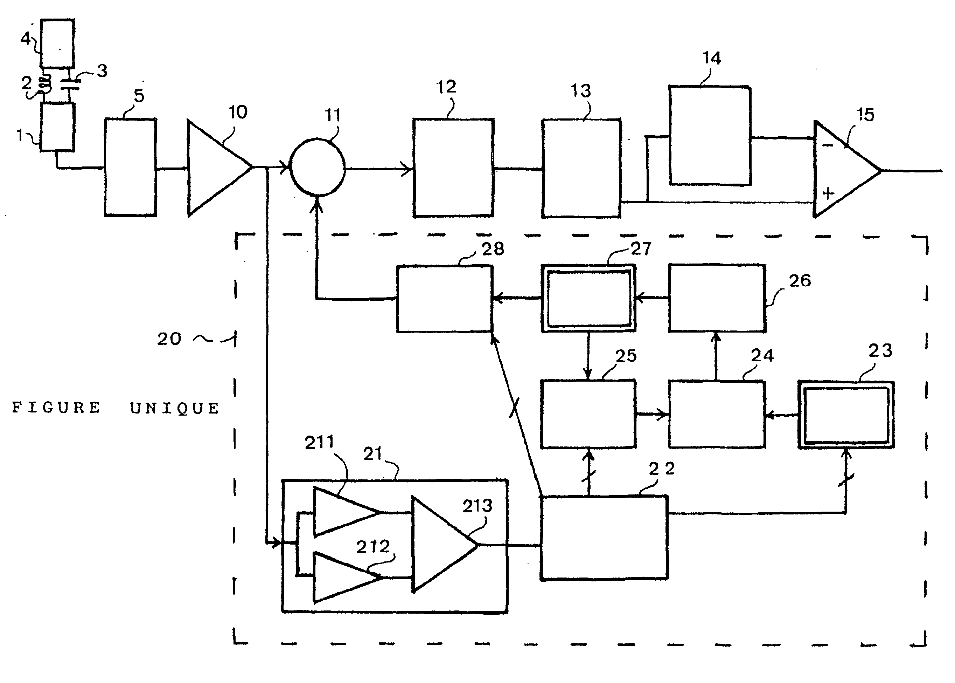

L'invention sera mieux comprise à l'aide de la description suivante d'une forme de réalisation préférée du récepteur de l'invention, en référence à la figure unique annexée qui en représente schématiquement les circuits.

Le récepteur multibande représenté est bi-bande dans cet exemple et comporte une antenne de réception d'une porteuse modulée par des données binaires, antenne constituée d'un élément rayonnant 1 accordé en quart d'onde sur la bande des 868 MHz et relié à un élément 4 identique à travers un circuit bouchon L, C, à inductance 2 et condensateur 3 en parallèle, accordé sur la bande des 868 MHz. L'ensemble constitue une antenne résonnante accordée à 434 et 868 MHz. L'élément 1 est relié à l'entrée d'un filtre passe-bande 5 à deux bandes centrées sur 434 et 868 MHz, qui commande un amplificateur à faible bruit 10. En sortie de l'amplificateur 10 se trouve un mélangeur 11 de changement ou transposition de fréquence fournissant un signal de porteuse transposée à fréquence intermédiaire fixe, ici 10,7 MHz, qui traverse un filtre passe-bande 12 et un démodulateur 13 fournissant les données démodulées à l'entrée non inverseuse d'un comparateur d'amplitude 15 ainsi qu'à l'entrée inverseuse ou soustractive de celui-ci à travers un circuit intégrateur 14. Le circuit intégrateur 14 fournit une valeur de seuil de référence, c'est-à-dire sensiblement la moitié de la valeur crête (bit = 1), qu'il mémorise, des signaux démodulés. Le comparateur 15 fournit donc les bits 0 et 1 du signal reçu.

Le mélangeur 11 est commandé, selon l'invention, de façon à sélectionner l'une des bandes de fréquences que peut recevoir efficacement l'antenne 1 à 4, c'est-à-dire 868 MHz (le circuit bouchon LC isole alors d'élément 4) ou encore la fréquence moitié de 434 MHz pour laquelle le circuit LC 2, 3 est passant et les éléments 1 et 4 équivallent à un seul élément accordé en quart d'onde à 434 MHz.

La commande du mélangeur 11 de fourniture de signal à fréquence intermédiaire est assurée par l'ensemble des circuits 21 à 28 globalement référencés 20.

A cet effet, la sortie de l'amplificateur 10 est reliée à un circuit 21 sélecteur ou discriminateur de bande de fréquences qui comporte deux circuits 211, 212 respectivement accordés sur les deux bandes et fournissent chacun un signal redressé et intégré présentant le niveau d'énergie radio reçu dans la bande considérée. Les circuits 211, 212 sont donc des filtres passe-bande décalés en fréquence, suivis chacun d'un redresseur et d'un intégrateur.

Un comparateur 213 compare les amplitudes des deux signaux de niveau ci-dessus et fournit un bit correspondant à un microprocesseur 22, désignant donc la bande utile, fournissant le plus d'énergie.

Le microprocesseur 22 contrôle le fonctionnement d'un générateur de fréquence 23 à 28 formant oscillateur local, pour en régler la fréquence en fonction de la sortie du comparateur 213, donc en fonction de la bande utile.

Le générateur de fréquence locale comporte un oscillateur maître stable 23 relié à une première entrée d'un comparateur de phase 24 qui, à travers un filtre passe-bande de boucle 26, commande un oscillateur esclave 27 à fréquence réglable, ici à commande par la tension (VCO), dont la sortie est rebouclée sur une deuxième entrée du comparateur de phase 24 à travers un diviseur par un facteur M, référencé 25. La sortie du VCO 27 commande le mélangeur 11 à travers un diviseur par N, référencé 28.

Dans cet exemple, le microprocesseur 22 commande ou règle la fréquence du générateur de fréquence 23 à 28 à la fois par les diviseurs 25 et 28 et par l'oscillateur 23, à fréquence réglable. Dans un autre exemple, il pourrait n'être prévu qu'une seule de ces trois commandes.

Les diviseurs 25 et 28 sont chacun constitués par un ou des compteurs comptant les périodes du signal, formant horloge, provenant du circuit amont. Ces compteurs fournissent des motifs successifs identiques de différents états de comptage, chaque motif comprenant un nombre déterminé et réglable d'états. Les compteurs du diviseur considéré effectuent donc un comptage en boucle de longueur réglable et fournissent, pour un état particulier de la boucle qui est décodé, une impulsion de changement d'état d'un étage aval diviseur par 2, de sortie du diviseur 25 ou 28. L'étage aval diviseur par 2 fournit donc alternativement un signal de valeur 0 pendant la durée d'un parcours de la boucle et un signal de valeur 1 de même durée lors du parcours suivant. Ce signal a ainsi un facteur de forme 0,5 et son spectre d'énergie se trouve donc essentiellement centré sur sa fréquence fondamentale, ce qui permet au mélangeur 11 de fonctionner avec un bon rendement.

Dans cet exemple, le réglage de la longueur de boucle, déterminant les valeurs M et N, s'effectue en décodant l'état "tout en 1" de la chaîne de compteurs considérée pour, à l'arrivée du signal d'horloge suivant du circuit amont, prépositionner les compteurs dans un état initial déterminé par le microprocesseur 22, au lieu de le laisser naturellement retomber à l'état "tout en 0". Le nombre d'états, de l'état initial ainsi réglé à l'état final "tout en 1", correspond à la valeur M ou N voulue, au facteur 2 près de l'étage diviseur de sortie, de remise en forme temporelle. Ce prépositionnement s'effectue en mettant à 1 les étages élémentaires voulus des compteurs, par des portes individuelles d'entrée parallèle chacune commandée par un bit particulier du microprocesseur 22 et toutes déverrouillées par l'état "tout en 1".

Le fonctionnement du récepteur va maintenant être expliqué plus en détails.

Le fonctionnement de la chaîne principale des circuits 5 et 10 à 15 est classique et bien connu et des explications complémentaires sont inutiles.

Le circuit sélecteur 21 fonctionne de façon permanente ou cyclique pour commander sans retard notable le microprocesseur 22 et donc le mélangeur 11 afin d'alimenter en signal utile les étages en aval 12 à 15.

Lorsque des signaux radio sont reçus dans l'une des bandes, le comparateur 213 identifie alors celle-ci par comparaison des niveaux respectifs des signaux de deux bandes issus des circuits 211 et 212 et l'indique au microprocesseur 22. On suppose ici que la réception simultanée de signaux utiles dans les deux bandes est exclue. Pour éviter que le bruit d'une bande au repos excède le niveau de signal utile de l'autre bande, détectée avec moins de sensibilité, il est préférable de prendre en compte, pour la comparaison des niveaux reçus, le rapport des sensibilités dans les deux bandes respectives, par exemple en amplifiant ou atténuant en proportion le signal de sortie du circuit 211 ou 212 qui convient, pour rendre égales les deux sensibilités de détection.

Le VCO 27 oscille à une fréquence M fois plus élevée que celle de l'oscillateur 23 et peut ainsi fonctionner dans de bonnes conditions. Il fournit une fréquence N fois plus faible que la sienne au mélangeur 11. Cette fréquence présente un écart de 10,7 MHz, dans cet exemple, par rapport à la porteuse antenne que l'on veut transposer à la fréquence intermédiaire ci-dessus. La fréquence en sortie de l'oscillateur local 23 à 28 doit donc être de 868 ± 10,7 = 857,3 MHz ou 878,7 MHz, pour la bande haute, ou bien 434 MHz plus basse que ci-dessus, soit 423,3 ou 444,7 MHz, pour la bande basse.

Pour passer de l'une des fréquences de la bande haute à l'une des fréquences de la bande basse et inversement, le microprocesseur 22 modifie par exemple le coefficient M ou N selon un facteur 2 ou voisin et ajuste le réglage par modification de l'autre coefficient N ou M. On conçoit que des nombres M et N élevés permettent un réglage d'autant plus précis. L'oscillateur 23 peut aussi être réglé, mais ici dans une plage limitée car il présente une bonne sélectivité qui assure sa stabilité en fréquence.

En variante, il pourrait être prévu de remplacer le diviseur 25, interposé sur l'entrée du comparateur 24 reliée au VCO 27, par un multiplieur de rang M interposé sur l'entrée opposée. Dans un cas comme dans l'autre, le diviseur 25 ou le multiplieur équivalent opposé effectue un changement de fréquence pour accorder l'oscillateur esclave 27 en fonction de la fréquence de l'oscillateur maître 23.

Pour éviter des commutations inutiles dues au bruit dans le comparateur 213 en l'absence de tout signal utile sur l'antenne 1 à 4, il peut être prévu un circuit à seuil comportant un comparateur supplémentaire, double, qui compare chacun des deux signaux, en entrée du comparateur 213, à un seuil bas adapté à la sensibilité dans chaque bande et qui, si aucun des deux signaux ne dépasse le seuil bas associé, bloque le comparateur 213 dans un état prédéterminé ou signale au microprocesseur 22, pour inhiber toute nouvelle commande de sa part, l'absence de tout signal utile. En variante, le comparateur 213 remplit lui-même cette fonction de protection contre le bruit et ses entrées comportent alors chacune, à cet effet, un circuit à seuils qui retranche un certain niveau de tension à chacun des deux signaux de niveau reçus en provenance des circuits 211 et 212. Ce circuit à seuils peut en variante être prévu dans ces derniers.

Pour traiter le cas de l'absence de toute commande externe sur ses deux entrées, due à l'absence de signal utile et aux circuits à seuil qui éliminent le bruit, le comparateur 213 comporte alors de préférence un circuit de polarisation prioritaire au repos de l'une de ses deux entrées, tel que résistance élevée de rappel à une tension positive, qui fournit une commande interne de faible niveau évitant toute oscillation de la sortie. Cette entrée est alors prioritaire par rapport à l'autre, en l'absence de toute commande externe. Cette commande interne devient sans effet dès qu'un signal externe, utile, apparaît sur l'autre entrée et fait donc disparaître l'état de repos.

## Revendications

1. Récepteur radio courte portée pour données de véhicule automobile, comportant des moyens d'antenne (1-4) agencés pour recevoir une pluralité de bandes de fréquences, lesdits moyens d'antérieur étant reliés à un bloc (10-15) de traitement d'une porteuse reçue dans une bande de fréquences déterminée et modulée par un signal de données, ledit bloc (10-15) comportant des moyens (11, 23-28) de transposition de fréquence de la porteuse reliés à des moyens (13) de démodulation de la porteuse transposée agencés pour fournir les données démodulées, ledit récepteur **caracterisé par le fait qu'**il comporte des moyens discriminateurs de fréquence (21, 22), reliés aux moyens d'antenne (1-4), agencés pour déterminer des niveaux respectifs de réception dans les bandes, pour les comparer entre eux et pour commander lesdits moyens de transposition de fréquence (11, 23-28) en fonction du résultat de la comparaison.

2. Récepteur selon la revendication 1, dans lequel les moyens de transposition de fréquence comportent une boucle (24-27) d'asservissement d'un oscillateur esclave (27) sur un oscillateur maître (23).

3. Récepteur selon la revendication 2, dans lequel la boucle d'asservissement (24-27) comporte un comparateur de phase (24) relié aux deux oscillateurs (23, 27) par deux entrées respectives, avec un circuit réglable (25) de changement de fréquence interposé sur l'une des entrées et agencé pour être commandé par les moyens discriminateurs (21, 22).

4. Récepteur selon l'une des revendications 2 et 3, dans lequel la boucle (24-27) commande un mélangeur (11), de transposition de fréquence du signal reçu, à travers un diviseur de fréquence (28) agencé pour être commandé par les moyens discriminateurs (21,22).

5. Récepteur selon l'une des revendications 2 à 4, dans lequel l'oscillateur maître (23) est agencé pour être commandé en fréquence par les moyens discriminateurs (21, 22).

6. Récepteur selon l'une des revendications 1 à 5, dans lequel les moyens discriminateurs (21, 22) comportent deux filtres passe-bande décalés en fréquence (211, 212) reliés aux entrées d'un comparateur (213) de choix de bande de fréquence.

7. Récepteur selon la revendication 6, dans lequel le comparateur (213) comporte en entrée deux circuits à seuil d'élimination du bruit.

8. Récepteur selon la revendication 7, dans lequel le comparateur (213) comporte un circuit de polarisation de repos prioritaire de l'une de ses entrées par rapport à l'autre.

## Claims

1. Short-range radio receiver for motor vehicle data, comprising antenna means (1-4) devised so as to receive a plurality of frequency bands, the said antenna means being linked to a block (10-15) for processing a carrier received in a determined frequency band and modulated by a data signal, the said block (10-15) comprising means (11, 23-28) of frequency transposition of the carrier that are linked to means (13) of demodulation of the transposed carrier that are devised so as to provide the demodulated data, the said receiver **characterized in that** it comprises frequency discriminator means (21, 22), linked to the antenna means (1-4), devised so as to determine respective levels of reception in the bands, so as to intercompare them and to control the said means of frequency transposition (11, 23-28) as a function of the result of the comparison.

2. Receiver according to Claim 1, in which the frequency transposition means comprise a loop (24-27) for feedback control of a slave oscillator (27) to a master oscillator (23).

3. Receiver according to Claim 2, in which the feedback control loop (24-27) comprises a phase comparator (24) linked to the two oscillators (23, 27) by two respective inputs, with an adjustable frequency changing circuit (25) interposed on one of the inputs and devised so as to be controlled by the discriminator means (21, 22),

4. Receiver according to one of Claims 2 and 3, in which the loop (24-27) controls a mixer (11), for transposition of frequency of the signal received, through a frequency divider (28) devised so as to be controlled by the discriminator means (21, 22).

5. Receiver according to one of Claims 2 to 4, in which the master oscillator (23) is devised so as to be frequency controlled by the discriminator means (21, 22).

6. Receiver according to one of Claims 1 to 5, in which the discriminator means (21, 22) comprise two frequency-offset bandpass filters (211, 212) linked to the inputs of a frequency band choice comparator (213).

7. Receiver according to Claim 6, in which the comparator (213) comprises at input two noise elimination threshold circuits.

8. Receiver according to Claim 7, in which the comparator (213) comprises a circuit for priority quiescent biasing of one of its inputs with respect to the other.

## Patentansprüche

1. Radioempfänger mit geringer Reichweite zum Datenempfang aus Fahrzeugen, der Antennenmittel (1-4) umfasst, die angeordnet sind, um mehrere Frequenzbänder zu empfangen, wobei die Antennenmittel mit einem Block (10-15) zur Verarbeitung eines Trägers verbunden sind, der in einem bestimmten und von einem Datensignal modulierten Frequenzband empfangen wird, wobei der Block (10-15) Mittel (11, 23-28) zur Frequenzverlagerung des Trägers umfasst, die mit Mitteln (13) zur Demodulation des verlagerten Trägers verbunden sind, die angeordnet sind, um die demodulierten Daten zu liefern, wobei der Empfänger **dadurch gekennzeichnet ist, dass** er Frequenzdiskriminatormittel (21, 22) umfasst, die mit den Antennenmitteln (1-4) verbunden sind, die angeordnet sind, um jeweilige Empfangsniveaus in den Bändern zu bestimmen, um sie miteinander zu vergleichen und um die Mittel der Frequenzverlagerung (11, 23-28) in Abhängigkeit vom Ergebnis des Vergleiches zu steuern.

2. Empfänger nach Anspruch 1, in dem die Mittel zur Frequenzverlagerung einen Regelkreis (24-27) eines Slave-Oszillators (27) auf einem Master-Oszillator (23) umfasst.

3. Empfänger nach Anspruch 2, in dem der Regelkreis (24-27) einen Phasenvergleicher (24) umfasst, der mit den beiden Oszillatoren (23, 27) durch zwei jeweilige Eingänge verbunden ist, mit einem regelbaren Kreis (25) des Frequenzwechsels, der zwischen einem der Eingänge geschaltet ist und der angeordnet ist, um durch die Diskriminatormittel (21, 22) gesteuert zu werden.

4. Empfänger nach einem der Ansprüche 2 und 3, in dem der Regelkreis (24-27) einen Mischer (11) steuert, zur Frequenzverlagerung des empfangenen Signals, über einen Frequenzteiler (28), der angeordnet ist, um durch die Diskriminatormittel (21, 22) gesteuert zu werden.

5. Empfänger nach einem der Ansprüche 2 und 4, in dem der Master-Oszillator (23) angeordnet ist, um in der Frequenz durch die Diskriminatormittel (21, 22) gesteuert zu werden.

6. Empfänger nach einem der Ansprüche 1 bis 5, in dem die Diskriminatormittel (21, 22) zwei Bandpassfilter (211, 212) mit verschobener Frequenz umfassen, die mit den Eingängen eines Vergleichers (213) der Auswahl des Frequenzbands verbunden sind.

7. Empfänger nach Anspruch 6, in dem der Vergleicher (213) am Eingang zwei Kreise mit Rauschunterdrückungsschwelle umfasst.

8. Empfänger nach Anspruch 7, in dem der Vergleicher (213) einen Ruhe-Polarisationskreis umfasst, der vorrangig der einen seiner Eingänge gegenüber dem anderen ist.
